# EUROPEAN PATENT SPECIFICATION

(11) **EP 2 516 576 B1**
(45) Date of publication and mention of the grant of the patent: **16.05.2018**
(21) Application number: 10778815.0
(22) Date of filing: 15.11.2010
(51) Int. Cl.: C09J 175/04, C03C 27/10, C08G 18/10, C08G 18/36, C08K 5/00, C09K 3/10, C08G 18/79

(54) **POLYURETHANE-BASED SEALANT FOR INSULATED GLASS UNITS**
POLYURETHAN-BASIERTER DICHSTOFF FÜR ISOLIERTE GLASEINHEIT
JOINT D'ÉTANCHÉITÉ À BASE DE POLYURÉTHANE POUR DES UNITÉS DE VITRAGE ISOLANT

(30) Priority: 21.12.2009 US 288747 P
(43) Date of publication of application: 31.10.2012
(73) Proprietor: Dow Global Technologies LLC, Midland, MI 48674 (US)
(72) Inventor: RADHAKRISHNAN, Bindushree, Lake Jackson, TX 77566 (US); LATHAM, Dwight, D., Clute, TX 77531 (US); GRIER, Laura, A., Brazoria, TX 77422 (US); KOONCE, William, A., Pearland, TX 77584 (US); SCHAEFER, Matthias, NL-4533 DW Terneuzen (NL); RIES, Paul, D., Midland, MI 48640 (US)
(74) Representative: Beck Greener
(86) International application number: PCT/US2010/056677
(87) International publication number: WO 2011/078922

(56) References cited:
- WO-A1-2009/009571
- WO-A2-2009/117630
- WO-A2-2009/117665
- US-A- 5 125 195

## Description

### FIELD OF THE INVENTION

This invention relates to insulating glass sealed with a polyurethane-based sealant in which the polyurethane is made using natural oil-based polyols (NOBP).

### BACKGROUND OF THE INVENTION

Insulating (or insulated) glass (IG) units comprise two parallel sheets of glass held apart by spacer bars. The cavity formed between the sheets of glass is filled with inert gas to help reduce heat and sound transmission. Typically two different types of sealants are used to join the glass to the spacer bars. The innermost or the primary sealant joins the space bars to the glass sheets, and serves as a barrier against escape or egress of the inert gas from the cavity as well as a barrier against the entry or ingress of moisture vapor into the cavity. Thermoplastic polyisobutylene is the most common primary sealant. However this material lacks mechanical strength and it exhibits comparably less adhesion than the outermost or secondary sealant. As such, one function of the secondary sealant is to provide mechanical strength to the unit and to prevent rupture of the primary sealant during the natural thermal cycles to which the unit is exposed.

Because of its good mechanical properties, polyurethane, particularly polyurethane that is based on a hydrophobic polybutadiene-based polyol, is a commonly used secondary sealant. However, such polyurethanes lack good UV stability and gas retention properties. They also contribute to a strong odor to these systems. Eliminating or reducing these drawbacks without significantly diminishing the mechanical properties of polyurethane for these applications, at a competitive price, is a topic of active research.

### SUMMARY OF THE INVENTION

In one embodiment the invention is a polyurethane-based sealant for an insulated glass unit, the polyurethane made using a NOBP which is made using monol-rich monomer, i.e., monomer from natural oil containing high levels of mono-hydroxy functional fatty acid alkyl esters, typically methyl esters. In one embodiment the high levels of mono-hydroxy functional fatty acid alkyl esters are naturally present in the natural oil while in another embodiment, the high levels of mono-hydroxy functional fatty acid alkyl esters are the result of subjecting the natural oil to a concentration or purification process, e.g., distillation. In one embodiment the natural oil is derived from soybeans.

In one embodiment the invention is an IG unit comprising a sealant composition comprising polyurethane made using NOBP monol-rich monomer. Insulated glass sealants based on these compounds provide enhanced resistance to UV and oxidative degradation as compared to conventional products while still providing the required barrier and mechanical properties.

### BRIEF DESCRIPTION OF THE DRAWINGS

Figure 1A is a DMTA plot of polybutadiene-based polyurethane of Comparative Example A.
Figure 1B is a DMTA plot of monol-rich monomer NOBP-based polyurethane of Example 4.
Figure 2A is a bar graph reporting the percent elongation of the polybutadiene-based polyurethane of Example A and the monol-rich monomer NOBP-based polyurethane of Example 4 before and after water exposure.
Figure 2B is a bar graph reporting the tensile strength in psi of the polybutadiene-based polyurethane of Example A and the monol-rich monomer NOBP-based polyurethane of Example 4 before and after water exposure.
Figure 3 is a bar graph reporting the effect of weathering on the mechanical properties of the polybutadiene-based polyurethane of Example A and the monol-rich monomer NOBP-based polyurethane of Example 4 film plaques.
Figure 4A is a bar graph reporting the MVTR of the polybutadiene-based polyurethane of Example A and the monol-rich monomer NOBP-based polyurethane of Example 4 film plaques.
Figure 4B is a bar graph reporting the OTR of the polybutadiene-based polyurethane of Example A and the monol-rich monomer NOBP-based polyurethane of Example 4 film plaques.

### DETAILED DESCRIPTION OF THE PREFERRED EMBODIMENT

Unless stated to the contrary, implicit from the context, or customary in the art, all parts and percents are based on weight and all test methods are current as of the filing date of this disclosure.

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, molecular weight, viscosity, is from 100 to 1,000, it is intended that all individual values, such as 100, 101, 102, and sub ranges, such as 100 to 144, 155 to 170, 197 to 200, are expressly enumerated. For ranges containing values which are less than one or containing fractional numbers greater than one (e.g., 1.1, 1.5), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, the relative amounts of components in the sealant compositions.

"Composition", "formulation" and like terms means a mixture or blend of two or more components. In the context of the monol-rich monomer, the composition includes the mono-hydroxy functional fatty acid alkyl ester and the other components naturally found in natural oil. In the context of a mix or blend of materials from which an IG sealant is prepared, the composition includes all the components of the mix, e.g., polyurethane and any optional components such as antioxidant, UV stabilizer, rheology modifiers, fillers, optional polymers, and the like.

"Monol-rich monomer" and like terms means a composition comprising at least 50, typically at least 75 and more typically at least 85, weight percent (wt%) mono-hydroxy functional fatty acid alkyl ester such as, but not limited to, that of formula I: 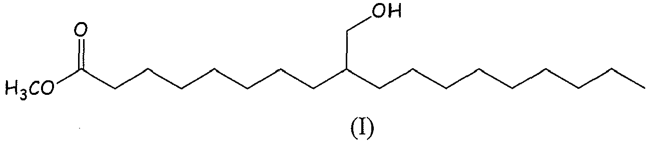 The length of the carbon backbone of formula I can vary, e.g., C₁₂-C₂₀, but it is typically C₁₈, as can the placement of the hydroxymethyl group along its length. The monol-rich monomer used in the practice of this invention can comprise a mixture of mono-hydroxy functional fatty acid alkyl esters varying in both carbon backbone length and hydroxy group placement along the length of the various carbon backbones. The monomer can also be an alkyl ester other than methyl, e.g., a C₂-C₈ alkyl ester. Other components of the composition include, but are not limited to, poly (e.g., di-, tri-, tetra-, ) hydroxy functional fatty acid alkyl esters.

"Monol-rich monomer NOBP", "NOBP made using monol-rich monomer" and like terms means a NOBP made using a monol-rich monomer.

"Monol-rich monomer NOBP polyurethane" and like terms means a polyurethane made using a monol-rich monomer NOBP.

### Natural Oil-Based Polyols

Natural oil-based polyols (NOBP) are polyols based on or derived from renewable feedstock resources such as natural and/or genetically modified plant vegetable seed oils and/or animal source fats. Such oils and/or fats are generally comprised of triglycerides, that is, fatty acids linked together with glycerol. Preferred are vegetable oils that have at least about 70 percent unsaturated fatty acids in the triglyceride. Preferably the natural product contains at least 85 percent by weight unsaturated fatty acids. Examples of preferred vegetable oils include, but are not limited to, those from castor, soybean, olive, peanut, rapeseed, corn, sesame, cotton, canola, safflower, linseed, palm, grapeseed, black caraway, pumpkin kernel, borage seed, wood germ, apricot kernel, pistachio, almond, macadamia nut, avocado, sea buckthorn, hemp, hazelnut, evening primrose, wild rose, thistle, walnut, sunflower, jatropha seed oils, or a combination of two or more of these oils. Examples of animal products include lard, beef tallow, fish oils and mixtures of two or more of these products. Additionally, oils obtained from organisms such as algae may also be used. Combination of vegetable, algae, and animal based oils/fats may also be used.

The modified natural oil derived polyols may be obtained by a multistep process in which the animal or vegetable oils/fats are subjected to transesterification and the constituent fatty acids recovered. This step is followed by hydroformylating carbon-carbon double bonds in the constituent fatty acids to form hydroxymethyl groups. Suitable hydroformylation methods are described in USP 4,731,486 and 4,633,021, for example, and in U.S. Published Patent Application 2006/0193802. The hydroxymethylated fatty acids are "monomers" which form one of the building blocks for the natural oil based polyol. The monomers may be a single kind of hydroxymethylated fatty acid and/or hydroxymethylated fatty acid methyl ester, such as hydroxymethylated oleic acid or methylester thereof, hydroxymethylated linoleic acid or methylester thereof, hydroxymethylated linolenic acid or methylester thereof, α- and γ-linolenic acid or methyl ester thereof, myristoleic acid or methyl ester thereof, palmitoleic acid or methyl ester thereof, oleic acid or methyl ester thereof, vaccenic acid or methyl ester thereof, petroselinic acid or methyl ester thereof, gadoleic acid or methyl ester thereof, erucic acid or methyl ester thereof, nervonic acid or methyl ester thereof, stearidonic acid or methyl ester thereof, arachidonic acid or methyl ester thereof, timnodonic acid or methyl ester thereof, clupanodonic acid or methyl ester thereof, cervonic acid or methyl ester thereof, or hydroxymethylated ricinoleic acid or methylester thereof. In one embodiment the monomer is hydroformylated methyloelate. Alternatively, the monomer may be the product of hydroformylating the mixture of fatty acids recovered from transesterification process of the animal or vegetable oils/fats. In one embodiment the monomer is hydrogenated soy bean fatty acids. In another embodiment the monomer is hydrogenated castor bean fatty acids. In another embodiment the monomer may be a mixture of selected hydroxymethylated fatty acids or methylesters thereof.

In one embodiment the NOBP is monol-rich monomer NOBP. The source of the monol-rich monomer can vary widely and includes, but is not limited to, high oleic feedstock or distillation of a low oleic feedstock, e.g., a natural seed oil such as soy as, for example, disclosed in co-pending application "PURIFICATION OF HYDROFORMYLATED AND HYDROGENATED FATTY ALKYL ESTER COMPOSITIONS" by George Frycek, Shawn Feist, Zenon Lysenko, Bruce Pynnonen and Tim Frank, filed June 20, 2008, application number PCT/US08/67585, published as WO 2009/009271. The use of NOBP made using a monomer not rich in mono-hydroxy functional fatty acid alkyl esters results in a highly crosslinked system that can lead to loss in mechanical properties. Sealant compositions require polymers with high elongation, and thus the preference for monol-rich monomer NOBP. Mono-functional monomers, such as those of formula (I), are used to synthesize the polyol.

The monol-rich monomer NOBP may be derived by first hydroformylating and hydrogenating the fatty alkyl esters or acids, followed by purification to obtain monol rich monomer. Alternatively, the fatty alkyl esters or acids may first be purified to obtain mono-unsaturated rich monomer and then hydroformylated and hydrogenated.

In one embodiment the NOBP is made from a monomer derived using epoxidation and ring opening of the natural oil fatty acids or methyl ester fatty acids, as described in WO 2009/058367 and WO 2009/058368.

The polyol is formed by reaction of the monomer with an appropriate initiator compound to form a polyester or polyether/polyester polyol. Such a multistep process is commonly known in the art, and is described, for example, in PCT publication Nos. WO 2004/096882 and 2004/096883. The multistep process can result in the production of a polyol with both hydrophobic and hydrophilic moieties, which results in enhanced miscibility with both water and conventional petroleum-based polyols.

The initiator for use in the multistep process for the production of the natural oil derived polyols may be any initiator used in the production of conventional petroleum-based polyols. Preferably the initiator is selected from the group consisting of neopentylglycol; 1,2-propylene glycol; trimethylolpropane; pentaerythritol; sorbitol; sucrose; glycerol; aminoalcohols such as ethanolamine, diethanolamine, and triethanolamine; alkanediols such as 1,6-hexanediol, 1,4-butanediol; 1,4-cyclohexane diol; 1,3-cyclohexanedimethanol, 1,4-cyclohexanedimethanol, 2,5-hexanediol; ethylene glycol; diethylene glycol, triethylene glycol; bis-3-aminopropyl methylamine; ethylene diamine; diethylene triamine; 9(1)-hydroxymethyloctadecanol, 1,4-bishydroxymethylcyclohexane; 8,8-bis(hydroxymethyl)tricyclo[5,2,1,0^{2,6}]decene; Dimerol alcohol (36 carbon diol available from Henkel Corporation); hydrogenated bisphenol; 9,9(10,10)-bishydroxymethyloctadecanol; 1,2,6-hexanetriol and combination thereof. Preferably the initiator is selected from the group consisting of glycerol; ethylene glycol; 1,2-propylene glycol; trimethylolpropane; ethylene diamine; pentaerythritol; 1,4-cyclohexanedimethanol, diethylene triamine; sorbitol; sucrose; or any of the aforementioned in which at least one of the alcohol or amine groups present has been reacted with ethylene oxide, propylene oxide or mixture thereof; and combinations thereof. Preferably, the initiator is glycerol, trimethylolpropane, pentaerythritol, 1,4-cyclohexanedimethanol, sucrose, sorbitol, and/or mixture thereof. Other initiators include other linear and cyclic compounds containing an amine. Exemplary polyamine initiators include ethylene diamine, neopentyldiamine, 1,6-diaminohexane; bisaminomethyltricyclodecane; bisaminocyclohexane; diethylene triamine; bis-3-aminopropyl methylamine; triethylene tetramine various isomers of toluene diamine; diphenylmethane diamine; N-methyl-1,2-ethanediamine, N-methyl-1,3-propanediamine, N,N-dimethyl-1,3-diaminopropane, N,N-dimethylethanolamine, 3,3'-diamino-N-methyl-dipropylamine, N,N-dimethyldipropylenetriamine and aminopropyl-imidazole.

In one embodiment the initiators are alkoxylated with ethylene oxide, propylene oxide, or a mixture of ethylene and at least one other alkylene oxide to give an alkoxylated initiator with a molecular weight between 200 and 6000, preferably between 500 and 5000. In one embodiment the initiator has a molecular weight of 550, in another embodiment the molecular weight is 625, and in yet another embodiment the initiator has a molecular weight of 4600.

In one embodiment at least one initiator is a polyether initiator having an equivalent weight of at least 400 or an average at least 9.5 ether groups per active hydrogen group, and such initiators are described in WO 2009/117630.

The ether groups of the polyether initiator may be in poly(alkylene oxide) chains, such as in poly(propylene oxide) or poly(ethylene oxide) or a combination thereof. In one embodiment the ether groups may be in a diblock structure of poly(propylene oxide) capped with poly(ethylene oxide).

In one embodiment the NOBP is a polyol which comprises at least two natural oil moieties separated by a molecular structure having at least about 19 ether groups or separated by a polyether molecular structure having an equivalent weight of at least about 480.

In one embodiment, a NOBP is made with an alkoxylated initiator or combination of alkoxylated initiators having an average equivalent weight of between 400 and 3000 per active hydrogen group. The average equivalent weight can be from a lower limit of 400, 450, 480, 500, 550, 600, 650, 700, 800, 900, 1000, 1200, or 1300 to an upper limit of 1500, 1750, 2000, 2250, 2500, 2750, or 3000 per active hydrogen group.

Thus, in this embodiment, at least two of the natural oil based monomers are separated by a molecular structure having an average molecular weight of between 1250 Daltons and 6000 Daltons. The average molecular weight can be from a lower limit of 1250, 1500, 1750, 2000, 2250, 2500, 2750, or 3000 Daltons to an upper limit of 3000, 3500, 4000, 4500, 5000, 5500, or 6000 Daltons.

To form the polyether initiator, the active hydrogen groups may be reacted with at least one alkylene oxide, such ethylene oxide or propylene oxide or a combination thereof; or a block of propylene oxide followed by a block of ethylene oxide, to form a polyether polyol by means within the skill in the art. The polyether initiator may be used as an initiator for reaction with at least one natural oil based monomer. Alternatively the initiator is reacted by means within the skill in the art to convert one or more hydroxyl groups to alternative active hydrogen groups, such as is propylene oxide.

Thus, in one embodiment the natural oil based polyol may comprise at least two natural oil moieties separated by a molecular structure having at least 19 ether groups or having an equivalent weight of at least 400, preferably both. When the polyether initiator has more than 2 active hydrogen groups reactive with the natural oil or derivative thereof, each natural oil moiety is separated from another by an average of at least 19 ether groups or a structure of molecular weight of at least 400, preferably both.

The functionality of the resulting natural oil based polyols is above 1.5 and generally not higher than 6. In one embodiment the functionality is below 4. The hydroxyl number of the natural oil based polyols may be below 300 mg KOH/g, preferably between 20 and 300, preferably between 20 and 200. In one embodiment, the hydroxyl number is below 100.

### Polyisocyanates

Any of numerous polyisocyanates, advantageously diisocyanates, can be used to make the NOBP polyurethane. In one embodiment the polyisocyanate is at least one of diphenylmethane diisocyanate ("MDI"), polymethylene polyphenylisocyanate ("PMDI"), paraphenylene diisocyanate, naphthylene diisocyanate, liquid carbodiimide-modified MDI and its various derivatives, isophorone diisocyanate, dicyclohexylmethane-4,4'-diisocyanate, toluene diisocyanate ("TDI"), particularly the 2,6-TDI isomer, as well as various other aliphatic and aromatic polyisocyanates that are well-established in the art.

### Sealant Composition

The NOBP is used to synthesize polyurethane sealant composition systems. Two-component polyurethane systems comprise a first component of a polyisocyanate and/or an isocyanate-terminated prepolymer with a second component of a low-molecular-weight polyol and/or urethane-modified polyol having molecular weight typically of less than 10,000, and are mixed immediately before application, and applied to a base material to be cured.

Typically the sealant composition of this invention comprises at least 20, more typically at least 25 and even more typically at least 30, wt% monol-rich monomer NOBP-based polyurethane. The sealant compositions of this invention typically also comprise at least one of a plasticizer, filler, pigment, antioxidant, rheology modifier, cure catalyst, UV stabilizer, adhesion promoter, cure accelerator, moisture scavenger, dye, surfactant, solvent and biocide.

Representative fillers include but are not limited to one or more of precipitated and colloidal calcium carbonates which have been treated with compounds such as stearic acid or stearate ester; reinforcing silicas such as fumed silicas, precipitated silicas, silica gels and hydrophobized silicas and silica gels; crushed and ground quartz, alumina, aluminum hydroxide, titanium hydroxide, diatomaceous earth, iron oxide, carbon black, graphite, mica, talc, and the like. Fillers, if present, typically comprise 20 to 80, more typically 30 to 70 and even more typically 40 to 60, wt% of the sealant composition.

The sealant composition typically comprises, if present, 0.1 to about 10 wt% of a glass adhesion promoter such as a silane, e.g., an aminopropyl- trimethoxysilane, mercaptopropyl trimethoxysilane or glycidoxypropyl trimethoxysilane. The sealant composition typically comprises, if present, 1 to 30, more typically 2 to 25 and even more typically 3 to 20 wt% of a plasticizer such as an alkylbenzyl phthalate (e.g., alkyl is octyl), chlorinated paraffin, seed oil or seed oil derivative, and the like.

The sealant composition can also include one or more alkoxysilanes as adhesion promoters. Useful adhesion promoters include N-2-aminoethyl-3-aminopropyltriethoxysilane, gamma-aminopropyltriethoxysilane, gamma-aminopropyltrimethoxysilane, aminopropyltrimethoxysilane, bis-gamma-trimethoxysilypropyl)amine, N-phenyl-gamma-aminopropyltrimethoxysilane, triaminofunctionaltrimethoxysilane and gamma-aminopropylmethyldiethoxysilane. The sealant composition typically comprises, if present, 0.1 to 10, more typically 0.5 to 8 and even more typically 1 to 6 wt% of the adhesion promoter.

The sealant compositions can also include one or more surfactants, typically a non-ionic surfactant, such as polyethylene glycol, polypropylene glycol, ethoxylated castor oil, oleic acid ethoxylate, alkylphenol ethoxylates, copolymers of ethylene oxide and propylene oxide, copolymers of silicones and polyethers, copolymers of silicones and ethylene oxide and/or propylene oxide. The sealant composition typically comprises, if present, 0.1 to 10, more typically 0.5 to 8 and even more typically 1 to 6 wt% of the surfactant.

The sealant compositions may also include at least one chain extender. For purposes of the embodiments of the invention, a chain extender is a material having two isocyanate-reactive groups per molecule and an equivalent weight per isocyanate-reactive group of less than 400, preferably less than 300 and especially from 31-125 Daltons. Representative of suitable chain-extending agents include polyhydric alcohols, aliphatic diamines including polyoxyalkylenediamines, and mixtures thereof. The isocyanate reactive groups are preferably hydroxyl, primary aliphatic amine or secondary aliphatic amine groups. The chain extenders may be aliphatic or cycloaliphatic, and are exemplified by triols, tetraols, diamines, triamines, aminoalcohols, and the like. Representative chain extenders include ethylene glycol, diethylene glycol, 1,3-propane diol, 1,3- or 1,4-butanediol, dipropylene glycol, 1,2- and 2,3-butylene glycol, 1,6-hexanediol, neopentylglycol, tripropylene glycol, 2-ethyl hexanediol, ethylene diamine, 1,4-butylenediamine, 1,6-hexamethylenediamine, 1,5-pentanediol, 1,6-hexanediol, 1,3-cyclohexandiol, 1,4-cyclohexanediol; 1,3-cyclohexane dimethanol, 1,4-cyclohexane dimethanol, N-methylethanolamine, N-methyliso-propylamine, 4-aminocyclohexanol, 1,2-diaminotheane, 1,3-diaminopropane, hexylmethylene diamine, methylene bis(aminocyclohexane), isophorone diamine, 1,3- or 1,4-bis(aminomethyl) cyclohexane, diethylenetriamine, and mixtures or blends thereof. The chain extenders may be used in an amount from 0.5 to 20, especially 1 to 10 parts by weight per 100 parts by weight of the polyol component.

In addition to the above described polyols, the polyol compositions may also include other ingredients such as preservatives and antioxidants.

Catalysts typically used in the one and two component sealant compositions of this invention include those known to be useful for facilitating polyurethane production. The catalysts include metal and non-metal catalysts. Examples of the metal portion of the metal catalysts useful in the present invention include tin, titanium, zirconium, lead, iron cobalt, antimony, manganese, bismuth and zinc compounds. In one embodiment the tin compounds useful for facilitating crosslinking in the sealant compositions include: tin compounds such as dibutyltindilaurate, dibutyltindiacetate, dibutyltindimethoxide, tinoctoate, isobutyltintriceroate, dibutyltinoxide, solubilized dibutyl tin oxide, dibutyltin bis-diisooctylphthalate, bis-tripropoxysilyl dioctyltin, dibutyltin bis-acetylacetone, silylated dibutyltin dioxide, carbomethoxyphenyl tin tris-uberate, isobutyltin triceroate, dimethyltin dibutyrate, dimethyltin di-neodecanoate, triethyltin tartarate, dibutyltin dibenzoate, tin oleate, tin naphthenate, butyltintri-2-ethylhexylhexoate, and tinbutyrate.

The sealant compositions of this invention may include at least one other polymer such as polyethylene, e.g., low density polyethylene (LDPE), very low density polyethylene (VLDPE), linear low density polyethylene (LLDPE) and high density polyethylene (HDPE); polypropylene (PP); polyisobutylene (PIB); polyvinyl acetate(PVAc); polyvinyl alcohol (PVOH); polystyrene; polycarbonate; polyester such as polyethylene terephthalate (PET), polybutylene terephthalate (PBT), polyethylene napthalate (PEN), and glycol-modified polyethylene terephthalate (PETG); polyvinylchloride (PVC); polyvinylidene fluoride; acrylonitrile; butadiene styrene (ABS); polymethylmethacrylate (PMMA); polyamide (nylon), polymethylpentene; polyimide (PI); polyetherimide (PEI); polyether ether ketone (PEEK); polysulfone; polyether sulfone; ethylene chlorotrifluoroethylene; polytetrafluoroethylene (PTFE); cellulose acetate; cellulose acetate butyrate; ionomers (e.g., Surtyn^{tm}); polyphenylene sulfide (PPS); styrene-maleic anhydride; modified polyphenylene oxide (PPO). The optional polymer or polymers can be elastomeric in nature, examples of which include but are not limited to, ethylene-propylene rubber (EPDM), polybutadiene, polychloroprene, polyisoprene, styrene-butadiene-styrene (SBS), styrene-ethylene-butadiene-styrene (SEBS), polymethylphenyl siloxane (PMPS). These optional polymers can be blended either alone or in combinations or used in the form of copolymers, e.g. polycarbonate-ABS blends, polycarbonate polyester blends, grafted polymers such as silane grafted polyethylenes. If present, the optional polymer is typically at least one of LDPE, VLDPE, LLDPE, and HDPE. If present, the optional polymer typically comprises 0.1 to 50, more typically 1 to 40, wt% of the sealant composition.

The sealant compositions of this invention are prepared by procedures well known in the art, e.g., melt blending, extrusion blending, solution blending, dry mixing, in or out of the presence of moisture, to provide a substantially homogeneous mixture. The sealant compositions of this invention are used in the same manner as known sealants for IG units.

### Insulated Glass Unit

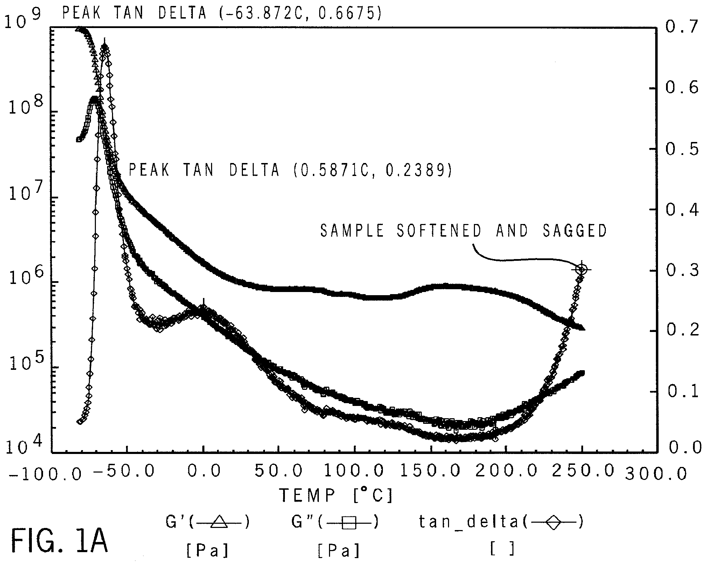

Insulated glass (IG) units are well known, and Figure 1a of WO 2009/060199 is illustrative. The IG unit is of known and conventional construction, and it includes two panes maintained in a parallel, spaced-apart relationship by one or more spacer bars, thus forming a cavity between the panes. A primary gas sealant is present between each spacer bar and each pane, adjacent to the cavity. A secondary gas sealant is present between each pane and each spacer bar, not adjacent to the cavity. The sealant composition of this invention can be either or both the primary and secondary gas sealants although it is typically the secondary sealant. The cavity between the panes is filled with an insulating gas or gases such as air, carbon dioxide, sulfur hexafluoride, nitrogen, argon, krypton, xenon, and the like. A glazing bead is typically positioned between the panes and the window frame. The panes can be fabricated from any of a variety of materials such as glass, e.g., clear float glass, annealed glass, tempered glass, solar glass, tinted glass and low energy glass; acrylic resin; polycarbonate resin.

The cured sealant composition of this invention provides improved gas barrier characteristics and moisture leakage characteristics relative to known and conventional gas sealants. As a result, the cured sealant composition of this invention provides for longer in-service performance of insulated glass units of all manner of construction.

Although the sealant compositions of this invention can serve as the primary gas sealant, typically the primary gas sealant comprises any one of a number of polymeric materials known in the art as useful for serving as a primary sealant including, but not limited to, rubber base materials such as polyisobutylene, butyl rubber, polysulfide, EPDM rubber, nitrile rubber. Other useful materials include, polyisobutylene/polyisoprene copolymers, polyisobutylene polymers, brominated olefin polymers, copolymers of polyisobutylene and para-methylstyrene, copolymers of polyisobutylene and brominated para-methylstyrene, butyl rubber-copolymer of isobutylene and isoprene, ethylene-propylene polymers, polysulfide polymers, polyurethane polymers, styrene butadiene polymers. In addition, the sealant composition of this invention can be used as the primary gas sealant.

The primary gas sealant member can be fabricated from a material such as polyisobutylene which has very good sealing properties. The glazing bead is a sealant that is sometimes referred to as the glazing bedding and can be provided in the form of a silicone or butyl rubber. Desiccant can be included in the continuous spacer to remove moisture from the insulating gas occupied cavity or space between the panes. Useful desiccants are those that do not adsorb the insulating gas/gases filling the interior of the insulated glass unit.

The following examples are illustrative of certain embodiments of the present invention. All parts and percentages are based on weight except as otherwise indicated.

### SPECIFIC EMBODIMENTS

### Example 1

NOBP-A (82.5 g, a soybean oil based polyol) is prepared according to Example 7 of WO 2009/117630. The molar ratio of monomer to initiator is 6:1. NOBP-A has a hydroxyl number of 27, and is blended with 1,4-butanediol (2.1 g) and sufficient dibutyltindilaurate to obtain 100 ppm of this catalyst. To this mixture ISONATE 143L (12.8 g, a polycarbodiimide-modified diphenylmethane diisocyanate available from The Dow Chemical Company) is added and vigorously mixed. The resulting blend is placed in a metal spacer between two metal plates and pressed at 50 °C to form a homogenous plaque or film. This resulting film has a tensile strength of 216 psi and an ultimate elongation of 322%.

### Example 2

NOBP-A (82.5 g) is blended with 2-ethyl-1,3 hexanediol (3.0 g) and sufficient dibutyltindilaurate to obtain 100 ppm of this catalyst. To this mixture ISONATE 143L (11.9 g) is added and the vigorously mixed. The resulting blend is placed in a metal spacer between two metal plates and pressed at 50 °C to form a homogenous plaque or film. This resulting film has a tensile strength of 2103 psi and an ultimate elongation of 367%.

### Example 3

NOBP-B is made by combining monol-rich natural oil monomer (1351.76 g) and 1,4-cyclohexanedimethanol (48.02 g). The monol-rich natural oil monomer has an average of 1.0 hydroxyls per fatty acid and is derived from fractionated fatty acids yielding a distribution of about 1 weight percent (wt%) saturated monomer, about 93 wt% mono-hydroxy monomer, about 3 wt% di-hydroxyl monomer, and about 1 wt% cyclic ethers. The monomer distribution is obtained using the method disclosed in co-pending application published as WO 2009/009271. The mixture is heated and held between 70 °C and 90 °C for 30 minutes with stirring and nitrogen stripping in a three neck flask. Stannous octoate (0.88 g) is then added to the mixture and the temperature is increased to 195 °C. The mixture is stirred at the reaction temperature of 195 °C with nitrogen stripping for 6 hours and then cooled to room temperature. The resulting NOBP-B polyol is then dispensed in air through the reactor bottom drain valve and stored in a HDPE plastic container.

### Example 4

NOBP-B (82.5 g) is blended with of 1,4-butanediol (2.5 g) and sufficient dibutyltindilaurate to obtain 100 ppm of this catalyst. To this mixture ISONATE 143L (15.1 g) is added and vigorously mixed. The resulting blend is placed in a metal spacer between two metal plates and pressed at 50 °C to form a homogenous plaque or film. This resulting film has a tensile strength of 362 psi and an ultimate elongation of 308%.

### Example 5

NOBP-B (10 g) is blended with 1,4-butanediol (0.3 g), Palatinol N (3.0 g, available from BASF), Super-Pflex 200 (8.5 g, available from Minerals Technologies Incorporated), Ultra-Pflex (4.0 g, available from Minerals Technologies Incorporated), Cab-O-Sil TS-720 fumed silica (0.3 g, available from Cabot Corp.), and sufficient dibutyltindilaurate to obtain 100 ppm of this catalyst. ISONATE 143L (1.8 g) is added and vigorously mixed. The resulting blend is placed in a metal spacer between two metal plates and pressed at 50 °C to form a homogenous plaque or film. This resulting film has a tensile strength of 386 psi and an ultimate elongation of 427%.

### Example 6

A homogenous plaque or film is made as in Example 5, but with 2-ethyl-1,3-hexanediol (0.3 g) as a chain extender instead of 1,4-Butanediol (0.3 g). This resulting film has a tensile strength of 354 psi and an ultimate elongation of 574%.

### Example 7

ISONATE 143L (64.5 grams) is added to NOBP-B (35.5 g) and the mixture is heated under nitrogen with stirring at 75 °C for 3 hours to form a prepolymer. The measured percent NCO of the resulting prepolymer is 20.1. A portion of the prepolymer. (1.7 g) is vigorously mixed with a blend of NOBP-B (10 g) 1,4-butanediol (0.3 g), Palatinol N (3.0 g), Super-Pflex 200 (8.5 g), Ultra-Pflex (4.0 g), Cab-O-Sil TS-720 fumed silica (0.3 g), and sufficient dibutyltindilaurate to obtain 100 ppm of this catalyst. The resulting blend is placed in a metal spacer between two metal plates and pressed at 50 °C to form a homogenous plaque or film. This resulting film has a tensile strength of 466 psi and an ultimate elongation of 316%.

### Comparative Example A

The polyol in Poly bd® Resin R-45HTLO (88.9 g, available from the Sartomer Company, Inc.) is blended with 2-ethyl-1,3-hexanediol (2.5 g) and sufficient dibutyltindilaurate to obtain 300 ppm of this catalyst. To this mixture, ISONATE 143L (14.3 g) is added and vigorously mixed. The resulting blend is placed in a metal spacer between two metal plates and pressed at 50 °C to form a homogenous plaque or film. This resulting film has a tensile strength of 248 psi and an ultimate elongation of 481%.

### Unfilled Systems

### DMTA

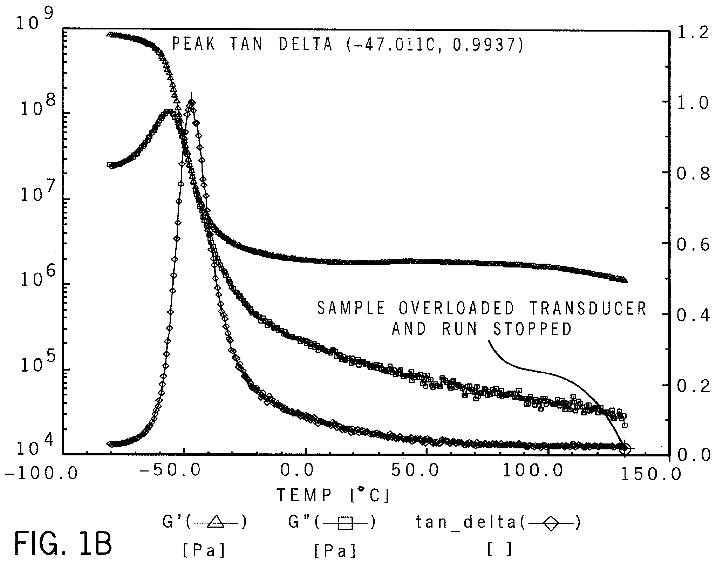

The polyurethane polymer of Example 4 is used for an insulated glass sealant composition. Figures 1A and 1B show that the properties of polyurethane prepared with monol-rich monomer NOBP are comparable to polybutadiene-based polyurethane (control). Dynamic mechanical thermal analysis (DMTA) measurements are made using a commercially available DMA instrument such as that available from TA Instruments under the trade designation RSA III, using a rectangular geometry in tension. Specimens are ramped from an initial temperature of -90 °C to a final temperature of 250 °C or until the sample fails. The DMTA plot of Figure 1A (polybutadiene based-PU) shows a dual transition at -50 °C and 0 °C. However the purified NOBP-based PU (Figure 1B) shows a single transition at -47 °C. This single transition is advantageous during the thermal cycles that IG sealants must withstand.

### Mechanical Properties

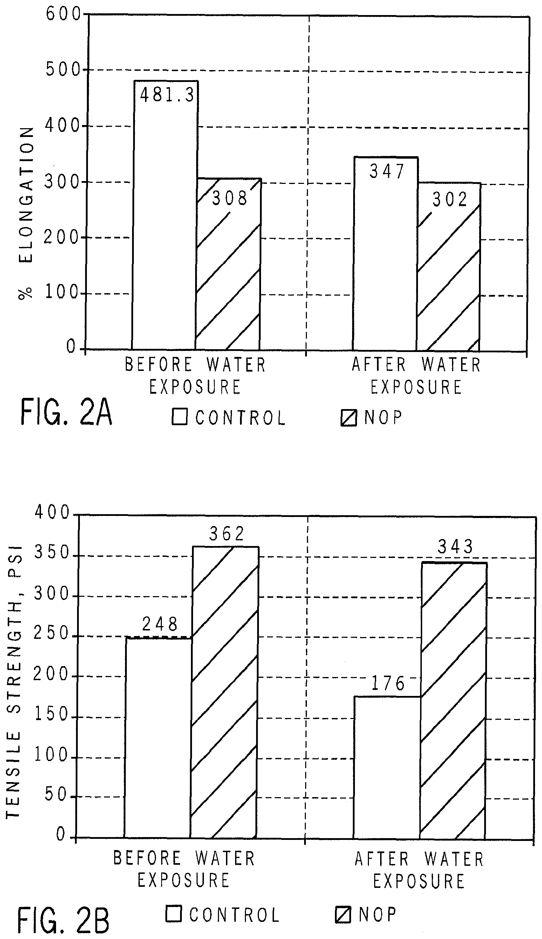

The mechanical properties of the polybutadiene- and the NOBP-based materials of Example 4 are compared before and after water absorption. The films are cut into dog bones and then immersed in deionized water for 24 hours or in boiling water for 1hour. After exposure the films are dried with a tissue and the tensile property are measured in accordance to ASTM D1708 on the same day, typically within the first couple of hours. The control sample lost about 25% of its elongation as shown in Figure 2A as well as tensile strength as shown in Figure 2B. However the monol-rich monomer NOBP-based material shows only marginal loss which is within the error of the measurements techniques. In the water absorption test the samples performed comparably.

### Weathering Properties

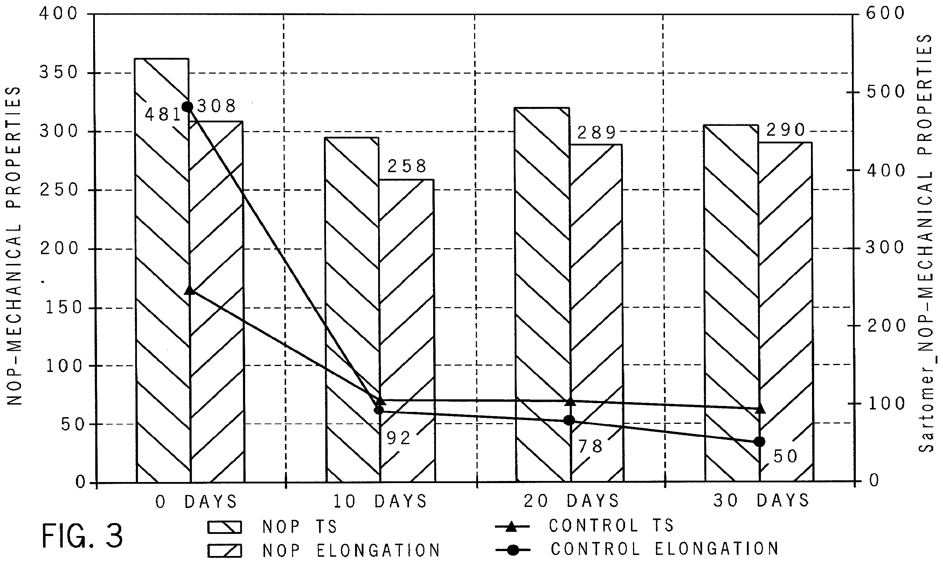

The polymer films are aged for thirty days using alternate cycles of UV exposure at 50 °C followed by 100% relative humidity for 4 hours each. The results as shown in Figure 3 indicate that the control sample performed very poorly compared to the purified NOBP-based samples. The hydrophobicity of the monol-rich monomer NOBP-based polyurethane proved advantageous in the weathering experiments.

### MVTR and OTR

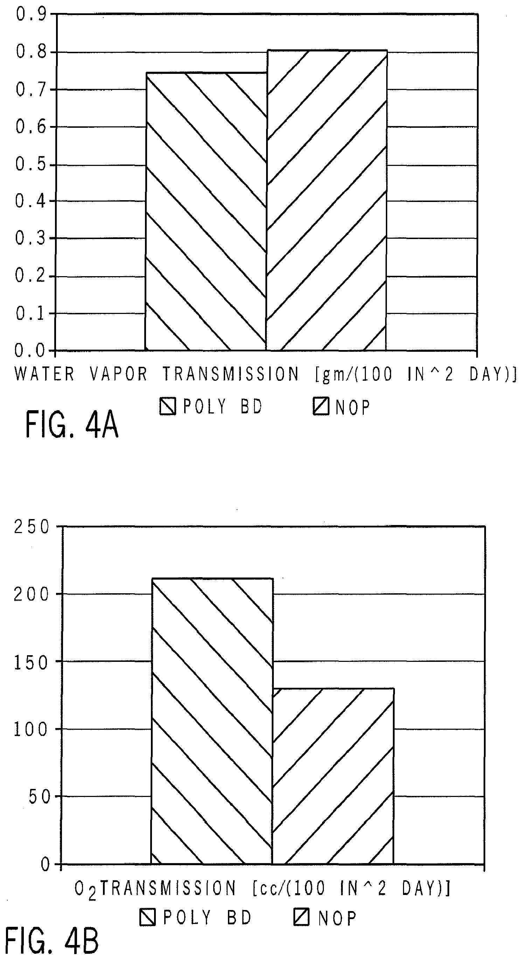

The polymer used as a secondary seal for insulating glass may also act as a moisture vapor or gas barrier resulting in further improvement in performance and service life of the IG units. Polybutadiene-based polyurethane shows good performance (Figure 4A) when it comes to moisture vapor transmission rate (MVTR). However further improvement is needed in gas permeation rates as measured by oxygen transmission rate (OTR). Monol-rich monomer NOBP-based polyurethane (Example 4) shows comparable results (Figure 4A) with the control. However the monol-rich monomer NOBP-based polyurethane shows an improvement in OTR measurements (Figure 4B).

### Fully Formulated Systems

The system with fillers and other additives showed comparable DMTA properties, but improvement in tensile and elongation properties. However the advantage of using the monol-rich monomer NOBP polyurethane in this sealant is its low viscosity which leads to lowering the actual amount of plasticizer in the final sealant.

Although the invention has been described with certain detail through the preceding specific embodiments, this detail is for the primary purpose of illustration. Many variations and modifications can be made by one skilled in the art without departing from the spirit and scope of the invention as described in the following claims.

## Claims

1. An insulating glass unit comprising:
two panes maintained in a parallel, spaced-apart relationship by one or more spacer bars;
a cavity between the panes,
a primary gas sealant between the spacer bar and the pane adjacent the cavity; and
a secondary gas sealant between the spacer bar and the pane, not adjacent the cavity,
wherein the primary and/or secondary gas sealant is a polyurethane-based sealant that comprises at least a reaction product of at least one isocyanate and at least one polyol blend,
the blend comprising a natural oil-based polyol (NOBP).

2. The insulating glass unit of Claim 1 in which the at least one NOBP is made using a monol-rich monomer derived from natural oil, wherein the monol-rich monomer comprises at least 50 weight percent mono-hydroxy functional fatty acid alkyl esters.

3. The insulating glass unit of Claim 1 or 2 in which the at least one NOBP comprises at least two natural oil moieties separated by a molecular structure having at least about 19 ether groups or separated by a polyether molecular structure having an equivalent weight of at least about 480.

4. The insulating glass unit of Claim 3 in which the sealant comprises the reaction product of at least one prepolymer comprising the reaction product of a first polyol and the at least one isocyanate and a second polyol, in which the first and second polyol may be the same or different and at least one of the first polyol and the second polyol comprises the at least one polyol blend comprising a NOBP.

5. The insulating glass unit of Claim 4 in which the polyol blend further comprises a chain extender.

6. The insulating glass unit of Claim 5 in which the chain extender comprises at least one of 2-ethyl-1,3-hexanediol and 1,4-butanediol.

7. The insulating glass unit of Claim 1 in which the NOBP is derived from a monomer composition comprising at least 85 weight percent (wt%) mono-hydroxy functional fatty acid alkyl ester.

8. The insulating glass unit of Claim 7 in which the mono-hydroxy functional fatty acid alkyl ester is mono-hydroxy functional fatty acid methyl ester.

9. The insulating glass unit of Claim 8 in which the mono-hydroxy functional fatty acid methyl ester is derived from soy oil.

10. The insulating glass unit of Claim 1 in which the polyurethane-based sealant is present as at least one seal of a dual seal system.

## Patentansprüche

1. Eine isolierende Glaseinheit, beinhaltend:
zwei Scheiben, die durch einen oder mehrere Abstandhalter in einer parallelen,
beabstandeten Beziehung gehalten werden;
einen Hohlraum zwischen den Scheiben,
eine primäre Gasabdichtung zwischen dem Abstandhalter und der Scheibe neben dem Hohlraum; und
eine sekundäre Gasabdichtung zwischen dem Abstandhalter und der Scheibe, nicht neben dem Hohlraum;
wobei die primäre und/oder sekundäre Gasabdichtung eine Abdichtung auf Polyurethanbasis ist, die mindestens ein Reaktionsprodukt aus mindestens einem Isocyanat und mindestens einem Polyolgemisch beinhaltet, wobei das Gemisch ein Polyol auf Basis natürlichen Öls (NOBP) beinhaltet.

2. Isolierende Glaseinheit gemäß Anspruch 1, wobei das mindestens eine NOBP unter Verwendung eines monolreichen Monomers, hergeleitet von natürlichem Öl, hergestellt ist, wobei das monolreiche Monomer zu mindestens 50 Gewichtsprozent monohydroxyfunktionelle Fettsäure-Alkylester beinhaltet.

3. Isolierende Glaseinheit gemäß Anspruch 1 oder 2, wobei das mindestens eine NOBP mindestens zwei Teile natürlichen Öls, getrennt durch eine molekulare Struktur mit mindestens etwa 19 Ethergruppen, oder getrennt durch eine molekulare Polyetherstruktur mit einem Äquivalentgewicht von mindestens etwa 480, beinhaltet.

4. Isolierende Glaseinheit gemäß Anspruch 3, wobei die Abdichtung das Reaktionsprodukt aus mindestens einem Präpolymer, beinhaltend das Reaktionsprodukt eines ersten Polyols und des mindestens einen Isocyanats und eines zweiten Polyols beinhaltet, wobei das erste und zweite Polyol gleich oder unterschiedlich sein können und mindestens eines des ersten Polyols und des zweiten Polyols das mindestens eine Polyolgemisch, beinhaltend ein NOBP, beinhaltet.

5. Isolierende Glaseinheit gemäß Anspruch 4, wobei das Polyolgemisch ferner einen Kettenverlängerer beinhaltet.

6. Isolierende Glaseinheit gemäß Anspruch 5, wobei der Kettenverlängerer mindestens eines von 2-Ethyl-1,3-hexandiol und 1,4-Butandiol beinhaltet.

7. Isolierende Glaseinheit gemäß Anspruch 1, wobei das NOBP von einer Monomerzusammensetzung hergeleitet ist, die zu mindestens 85 Gewichtsprozent (Gew.-%) monohydroxyfunktionellen Fettsäure-Alkylester beinhaltet.

8. Isolierende Glaseinheit gemäß Anspruch 7, wobei der monohydroxyfunktionelle Fettsäure-Alkylester monohydroxyfunktioneller Fettsäure-Methylester ist.

9. Isolierende Glaseinheit gemäß Anspruch 8, wobei der monohydroxyfunktionelle Fettsäure-Methylester von Sojaöl hergeleitet ist.

10. Isolierende Glaseinheit gemäß Anspruch 1, wobei die Abdichtung auf Polyurethanbasis als mindestens eine Dichtung eines dualen Dichtungssystems vorhanden ist.

## Revendications

1. Un bloc à vitrage isolant comprenant :
deux vitres maintenues dans une relation d'espacement parallèle l'une de l'autre par un ou plusieurs intercalaires ;
une cavité entre les vitres,
un matériau de scellement étanche aux gaz primaire entre l'intercalaire et la vitre adjacent à la cavité ; et
un matériau de scellement étanche aux gaz secondaire entre l'intercalaire et la vitre,
non adjacent à la cavité,
où le matériau de scellement étanche aux gaz primaire et/ou secondaire est un matériau de scellement étanche à base de polyuréthane qui comprend au moins un produit de la réaction d'au moins un isocyanate et d'au moins un mélange homogène de polyol, le mélange homogène comprenant un polyol à base d'huile naturelle (NOBP).

2. Le bloc à vitrage isolant de la revendication 1 dans lequel l'au moins un NOBP est réalisé en utilisant un monomère riche en monol dérivé d'huile naturelle, où le monomère riche en monol comprend au moins 50 pour cent en poids d'esters alkyliques d'acides gras mono-hydroxy fonctionnels.

3. Le bloc à vitrage isolant de la revendication 1 ou de la revendication 2 dans lequel l'au moins un NOBP comprend au moins deux groupements huile naturelle séparés par une structure moléculaire ayant au moins environ 19 groupes éther ou séparés par une structure moléculaire polyéther ayant un poids équivalent d'au moins environ 480.

4. Le bloc à vitrage isolant de la revendication 3 dans lequel le matériau de scellement étanche comprend le produit de la réaction d'au moins un prépolymère comprenant le produit de la réaction d'un premier polyol et de l'au moins un isocyanate et d'un deuxième polyol, dans lequel le premier et le deuxième polyol peuvent être les mêmes ou différents et au moins un polyol parmi le premier polyol et le deuxième polyol comprend l'au moins un mélange homogène de polyol comprenant un NOBP.

5. Le bloc à vitrage isolant de la revendication 4 dans lequel le mélange homogène de polyol comprend en sus un allongeur de chaîne.

6. Le bloc à vitrage isolant de la revendication 5 dans lequel l'allongeur de chaîne comprend au moins un élément parmi le 2-éthyl-1,3-hexanediol et le 1,4-butanediol.

7. Le bloc à vitrage isolant de la revendication 1 dans lequel le NOBP est dérivé d'une composition de monomère comprenant au moins 85 pour cent en poids (% en poids) d'ester alkylique d'acide gras mono-hydroxy fonctionnel.

8. Le bloc à vitrage isolant de la revendication 7 dans lequel l'ester alkylique d'acide gras mono-hydroxy fonctionnel est un ester méthylique d'acide gras mono-hydroxy fonctionnel.

9. Le bloc à vitrage isolant de la revendication 8 dans lequel l'ester méthylique d'acide gras mono-hydroxy fonctionnel est dérivé d'huile de soja.

10. Le bloc à vitrage isolant de la revendication 1 dans lequel le matériau de scellement étanche à base de polyuréthane est présent en tant qu'au moins un scellement étanche d'un système à double scellement étanche.
